Europäisches Patentamt

(19) European Patent Office

Office européen des brevets

(11) Numéro de publication: **0 354 092**
**A1**

## (12) DEMANDE DE BREVET EUROPEEN

(21) Numéro de dépôt: **89402079.1**

(22) Date de dépôt: **21.07.89**

(51) Int. Cl.⁵: **A 23 L 1/322**
**A 23 P 1/08, A 23 P 1/10**

(30) Priorité: **03.08.88 FR 8810763**

(43) Date de publication de la demande:
**07.02.90 Bulletin 90/06**

(84) Etats contractants désignés:
**AT BE CH DE ES GB GR IT LI LU NL SE**

(71) Demandeur: **OV'ACTION (SA)**
**Zone Industrielle de Liévin BP 52**
**F-62800 Lievin (FR)**

(72) Inventeur: **Dumas, Frédéric**
**43, rue Henri Bailleux**
**F-59160 Lomme (FR)**

**Bouttemy, Franck**
**62, rue de Lyon**
**F-62217 Achicourt (FR)**

**Rochas, Jean-François**
**6, allée Claude Dumond**
**F-69300 Caluire (FR)**

**Jacomino, Jean-Marie**
**5, rue du Maréchal Foch**
**F-69100 Villeurbanne (FR)**

**Huc, Christian**
**53, rue des Augustines**
**F-62000 Arras (FR)**

(74) Mandataire: **Hasenrader, Hubert et al**
**Cabinet BEAU DE LOMENIE 55, rue d'Amsterdam**
**F-75008 Paris (FR)**

(54) **Procédé et installation de fabrication d'un produit complexe à base d'oeuf.**

(57) L'invention consiste dans les étapes suivantes :

a) une étape d'alimentation consistant à alimenter n 1 contenants en coule fraîche de blanc d'oeuf et n 2 contenants en coule fraîche de jaune d'oeuf , lesdits contenants ayant la même forme et étant réalisés dans un matériau inerte aux micro-ondes, la somme n = n1 + n2 étant au moins égale à deux n1 étant soit égal à n2 soit différent de n2 d'une unité,

b) une étape de pré-cuisson consistant à soumettre chaque coule à l'action des micro-ondes de telle sorte qu'elle coagule dans le contenant , sous forme d'une couche homogène, sans toutefois atteindre l'état cuit dur,

c) une étape de superposition consistant à extraire des contenants les couches et superposer sur la couche inférieure les couches extraites de telle sorte qu'une couche à base de coule de blanc alterne avec une couche à base de coule de jaune,

d) et une étape de complexage consistant à soumettre les couches ainsi superposées à un traitement thermique complémentaire, ayant pour but d'atteindre la cuisson désirée, tout en assurant le complexage des différentes couches.

De préférence, chaque contenant est une bande (8,9,10) continue, en un matériau inerte aux micro-ondes , ayant un relief en creux ou déformée pour former un relief en creux. Après le passage dans les enceintes micro-ondes (22) de précuisson, chaque bande supérieure (8,9) a un parcours descendant incliné vers la bande inférieure correspondante (9, 10) de manière à superposer la couche précuite . Toutes les couches superposées passent ensuite dans l'enceinte (34) de cuisson et de complexage, puis le produit fini est tronçonné à la longueur désirée, et éventuellement coupé à la largeur désirée.

FIG 1

Description

## PROCEDE ET INSTALLATION DE FABRICATION D'UN PRODUIT COMPLEXE A BASE D'OEUF

L'invention concerne la fabrication d'un produit à base d'oeuf, à l'état cuit dur ou proche de cet état, comportant des couches séparées de blanc et de jaune. Elle concerne plus particulièrement un procédé automatique de fabrication de ce produit complexe et l'installation spécialement conçue pour sa mise en oeuvre.

On connaît par le brevet français N° 2.172.904 un produit alimentaire à base de blanc et de jaune d'oeuf à l'état cuit dur, dans lequel le blanc et le jaune sont en couches superposées et alternées, substantiellement planes. Le procédé de fabrication décrit dans ce brevet consiste, après avoir cassé les oeufs, à séparer les jaunes et les blancs en ayant soin de ne pas rompre la membrane vitelline qui entoure chaque jaune, à cuire les jaunes entiers dans leur membrane vitelline, à mettre en forme les jaunes cuits, à cuire le blanc et à le mettre en forme puis à mettre en contact le jaune et le blanc. Il est impératif, selon ce procédé, de cuire le jaune de chaque oeuf, individuellement dans sa membrane si l'on veut garder des propriétés gustatives identiques ou analogues à celles d'un jaune d'oeuf dur qui aurait été cuit, en même temps que le blanc , à l'intérieur d'un oeuf d'origine. Ce procédé est délicat à mettre en oeuvre et difficilement automatisable.

On connaît par le brevet français N° 2.292.440 un procédé pour fabriquer un produit complexe à base d'oeuf. Ce procédé consiste à injecter le blanc d'oeuf dans un moule cylindrique présentant un noyau interne, à précoaguler le blanc en le portant à une certaine température, à extraire le noyau interne, à introduire dans la cavité centrale laissée libre par l'extraction du noyau interne du jaune d'oeuf préchauffé, à terminer la coagulation du blanc et du jaune et à extraire du moule le produit cylindrique obtenu. Ce procédé nécessite, dans un même moule, une première opération de précoagulation du blanc , puis une opération de coagulation du jaune. Le produit obtenu a la forme d'un cylindre dont l'enveloppe externe est un blanc d'oeuf et le coeur un jaune d'oeuf.

Or on a trouvé et c'est ce qui fait l'objet de l'invention un procédé de fabrication d'un produit complexe à base d'oeuf sous forme de couches superposées et alternées de blanc et de jaune à l'état cuit dur qui se distingue des procédés connus. Le procédé de l'invention comprend les quatre étapes successives suivantes :

a) une étape d'alimentation consistant à alimenter $n_1$ contenants en coule fraîche de blanc d'oeuf et $n_2$ contenants en coule fraîche de jaune d'oeuf, lesdits contenants ayant la même forme et étant réalisés dans un matériau inerte aux micro-ondes , le nombre de contenants étant tel que la somme $n = n_1 + n_2$ est au moins égale à deux et $n_1$ est soit égal à $n_2$ soit différent de $n_2$ d'une unité,

b) une étape de précuisson consistant à soumettre chaque coule à l'action des micro-ondes de telle sorte qu'elle coagule dans le contenant, sous forme d'une couche homogène, sans toutefois atteindre l'état cuit dur,

c) une étape de superposition consistant à extraire des contenants les couches constituées par les coules coagulées et à superposer les couches extraites de telle sorte qu'une couche à base de coule de blanc alterne avec une couche à base de coule de jaune,

d) et une étape de complexage consistant à soumettre les couches ainsi superposées à un traitement thermique complémentaire , ayant pour but d'atteindre la cuisson désirée, tout en assurant le complexage des différentes couches.

Ainsi dans le procédé de l'invention, la pré-cuisson du blanc et du jaune est faite en une seule opération, en temps masqué, par l'action des micro-ondes. Il a été en effet constaté qu'il était possible grâce aux micro-ondes d'obtenir dans un temps court une coagulation adéquate et homogène, tant pour le blanc que pour le jaune. Cette coagulation peut être réglée de manière à ce que l'état cuit dur ne soit pas atteint ; de la sorte, après superposition des couches précuites, le traitement thermique final permet d'atteindre la cuisson désirée et d'assurer le complexage des différentes couches entre elles, c'est-à-dire une certaine adhésion d'une couche à l'autre qui donne au produit complexe fini sa cohésion d'ensemble. Il ne s'agit pas d'un produit formé de couches individuelles superposées et séparables mais d'un produit unique, manipulable, formé de couches liées entre elles.

Avantageusement, pendant l'étape de pré-cuisson, chaque coule est maintenue dans une atmosphère de vapeur saturée. Cette disposition particulière présente l'avantage d'éviter un éventuel dessèchement superficiel de la couche précuite, un tel dessèchement d 'une part limitant les facultés de complexage d'une couche sur l'autre et d'autre part altérant l'aspect de la surface extérieure du produit fini.

Dans le cas où l'on désire un produit complexe de section carrée, dans laquelle toutes les couches superposées ont les mêmes dimensions, le procédé est tel que, la partie creuse de chaque contenant ayant une section de forme rectangulaire , l'alimentation en coule fraîche de chacun des $n$ contenants est telle que la hauteur de la coule dans chaque contenant est égale à $1/n$ fois la largeur du contenant.

Et si l'on veut respecter la proportion existant dans un oeuf entre le blanc et le jaune, à savoir deux tiers de blanc pour un tiers de jaune, dans le produit complexe le plus simple, il suffit d'alimenter trois contenants, l'un à partir de coule de jaune et les deux autres à partir de coule de blanc , et de superposer les couches de coules précuites de telle sorte que la couche de jaune soit prise en sandwich entre les deux couches de blanc.

Dans la version préférée du procédé de l'invention, l'alimentation en coules fraîches est continue dans chaque contenant, qui consiste en une bande présentant un relief en creux, la précuisson se fait par passage des $n$ bandes dans au moins une enceinte alimentée en micro-ondes, et le produit obtenu après complexage est tronçonné en produits individuels à la longueur désirée et éventuellement coupé à la largeur désirée.

Ainsi le procédé de fabrication est totalement continu.

Avantageusement les $n$ bandes étant placées l'une au-dessus de l'autre, la superposition d'une première couche correspondant à une bande supérieure sur une seconde couche correspondant à une bande inférieure est obtenue par démoulage de la première couche et dépose de la première couche ainsi démoulée sur la seconde couche en place dans la bande inférieure. Ceci est possible du fait que, après l'étape de précuisson, chaque couche, qui est dans un état de coagulation proche de l'état cuit dur est manipulable et même relativement déformable. La couche supérieure peut donc suivre un parcours qui n'est pas rectiligne mais descendant jusqu'à être déposée sur la couche inférieure. Et ainsi de proche en proche, une couche supérieure (par exemple de blanc) sera déposée sur une couche inférieure composée de deux couches (une de jaune au-dessus d'une de blanc) jusqu'à superposition des $n$ couches précuites. De préférence avant leur superposition, les couches sont maintenues à une température proche de celle de la pré-cuisson, par exemple 73°C. De préférence, la face de dessous de la couche supérieure, en particulier lorsque celle-ci est une couche de blanc, est séchée préalablement à la superposition de ladite couche supérieure sur la couche inférieure. Le traitement thermique complémentaire de cuisson consiste par exemple dans l'action des micro-ondes.

C'est un autre objet de l'invention que de protéger une installation spécialement conçue pour mettre en oeuvre le procédé précité. Cette installation comprend :

    a. des moyens en alimentation séparée de coule fraîche à base de blanc et de coule fraîche à base de jaune,

    b. $n$ contenants, de forme identique, réalisés en un matériau inerte aux micro-ondes, $n$ étant égal ou supérieur à 2, dont $n1$ pour le blanc et $n2$ pour le jaune, $n1$ étant égal à $n2$ ou différent de $n2$ d'une unité,

    c. des moyens de précuisson par micro-ondes des coules contenues dans les contenants, réglés en sorte que chaque coule coagule de façon homogène dans le contenant sans toutefois atteindre l'état cuit dur,

    d. des moyens de superposition des couches de coules précuites,

    e. des moyens de traitement thermique des couches superposées, réglés en sorte d'assurer le complexage des différentes couches et d'atteindre la cuisson désirée.

Les moyens en alimentation séparée de coules fraîches comprennent deux réservoirs distincts, l'un destiné à contenir les coules à base de blanc et l'autre les coules à base de jaune, des moyens d'agitation des coules contenues dans chaque réservoir et des moyens d'alimentation proprement dits des coules dans les $n$ contenants. L'agitation des coules contenues dans chaque réservoir est nécessaire pour assurer une bonne homogénéité des coules et donc une qualité constante du produit.

Dans le mode préféré de réalisation de l'installation, chaque contenant consiste en une bande continue présentant un relief en creux, et l'installation comporte des moyens de support et de déplacement continu de chaque bande à la même vitesse . Dans ce cas le moyen d'alimentation proprement dit de la coule fraîche correspondant à une bande consiste en une conduite, débouchant dans la zone dite d'alimentation au-dessus de la partie creuse de la bande formant récipient continu, en amont des moyens de précuisson.

Les moyens de précuisson par micro-ondes consistent en une cavité résonnante alimentée par un guide à fentes rayonnantes placée dans le sens du déplacement de la bande après la zone d'alimentation. Cette cavité est assortie de moyens de production de vapeur d'eau ou de conservation de la vapeur d'eau dégagée lors de la précuisson, capables de maintenir une atmosphère de vapeur saturée autour de la bande pendant la précuisson . Ce pourra être par exemple une plaque, formant couvercle, dans un matériau inerte aux micro-ondes, placée au-dessus et entourant la bande pendant son parcours dans la cavité. Ce pourra être par exemple une bande plate et continue, d'un matériau imperméable à la vapeur d'eau et inerte aux micro-ondes, assortie de moyens de déplacement capables de la positionner, lors de son déplacement à l'intérieur de l'enceinte micro-ondes au-dessus du contenant , de manière à former un couvercle sensiblement étanche.

Préférentiellement , la bande présente une légère inclinaison , étant plus haute dans la zone d'alimentation que dans la zone d'action des micro-ondes. Cette inclinaison favorise la constance de l'alimentation en évitant l'étalement éventuel de la coule en amont de la zone d'alimentation et, de ce fait, assure une bonne homogénéité quant à la hauteur de la couche pré-cuite.

Dans le cas où chaque contenant consiste en une bande continue animée de la même vitesse, les moyens de support et de déplacement continu d'une bande correspondant à une couche précuite donnée sont placés soit en-dessus soit en-dessous d'une autre bande en fonction de la place de ladite couche dans le produit fini, et les moyens de superposition consistent dans des moyens d'inclinaison de la portion d'une bande supérieure située en aval de ses moyens de précuisson vers la portion d'une bande inférieure située en aval de ses moyens de précuisson et dans des moyens de retour de la bande supérieure, créant un changement brutal de direction, lorsque ladite bande supérieure est juste en-dessus de la bande inférieure. Le changement brutal de direction de la bande supérieure, de préférence de l'ordre de 140 à 170°, favorise le décollement de la couche précuite placée sur la bande supérieure, laquelle couche est alors déposée sur la couche précuite de la bande inférieure. Eventuellement au niveau des moyens de retour de la bande supérieure , sont placés des moyens de décollement latéral de la couche, consistant par exemple dans des lames fixes logées au regard des bords latéraux de la partie creuse de la bande.

Bien sûr, ce qui vient d'être dit pour deux bandes, correspondant à deux couches, est transposable autant de fois qu'il y a de couches à superposer. Dans le cas de trois couches, la seconde bande ci-dessus est elle-même placée en-dessus et inclinée vers une troisième bande qui est ici la bande inférieure. La bande supportant la couche la plus basse du produit peut être rectiligne : l'extraction de l'ensemble des couches précuites superposées est réalisée par les moyens de décollement soit avant soit après le passage des moyens thermiques complémentaires.

Les moyens thermiques complémentaires consistent, par exemple, en une cavité micro-ondes.

A la sortie des moyens thermiques sont prévus des moyens de découpe, capables de tronçonner le produit continu sortant de cuisson en produits individuels à la longueur et à la largeur souhaitées, et éventuellement des moyens d'emballage et de conditionnement automatiques.

Selon un premier mode de réalisation d'une bande continue, chaque bande est une bande sans fin en forme de boucle fermée réalisée en un matériau souple, par exemple en caoutchouc ayant une section en creux. Le matériau doit être suffisamment souple pour supporter les variations dues à la forme de boucle fermée.

Selon un second mode de réalisation d'une bande continue, chaque bande est une bande d'un matériau plat et flexible, et l'installation comporte des moyens de déformation de la bande capables de lui donner la forme d'un récipient continu et des moyens de maintien de la bande mise en forme pendant son déplacement depuis la zone d'alimentation jusqu'à la sortie des moyens de précuisson. Par exemple le matériau est une bande de papier dont la face en contact avec les coules d'oeuf présente un revêtement anti-adhérent, respectant les normes alimentaires. Ce papier peut être jeté après utilisation.

L'invention sera mieux comprise à la lecture de la description qui va maintenant être faite d'un exemple de réalisation de l'installation de fabrication d'un produit complexe, de section carrée, à base d'oeuf, illustré par le dessin annexé dans lequel :

La figure 1 est une représentation schématique simplifiée de côté de l'installation , comportant trois bandes.

La figure 2 est une vue schématique de la partie d'installation relative à une bande .

La figure 3 est une vue schématique en perspective des moyens de déformation d'une bande.

La figure 4 est une vue en coupe d'une cavité selon l'axe AA' de la figure 1.

Les deux cuves 1 et 2 sont équipées toutes deux d'un agitateur 3 et sont thermostatées, de manière à maintenir les coules fraîches qu'elles contiennent à une température inférieure à 10°C. Les cuves 1 et 2 contiennent respectivement de la coule fraîche de blanc d'oeuf 4 et de jaune d'oeuf 5. Les coules proviennent de casseries où les oeufs ont été cassés, les blancs et les jaunes séparés, homogénéisés et maintenus à basse température, de l'ordre de 4°C de manière à assurer une bonne conservation. Bien sûr il est possible d'ajouter aux coules des ingrédients, tels que sels, aromates...

Chaque cuve 1 et 2 est munie de conduites respectivement 6 et 7 destinées à alimenter les coules sur les bandes correspondantes. La conduite 6 comporte deux branches 6a et 6b l'une 6a pour alimenter la bande supérieure 8 et l'autre la bande inférieure 10. La conduite 7 alimente la bande intermédiaire 9. Chaque conduite 6 et 7 comporte des moyens d'ouverture et de fermeture respectivement 11 et 12.

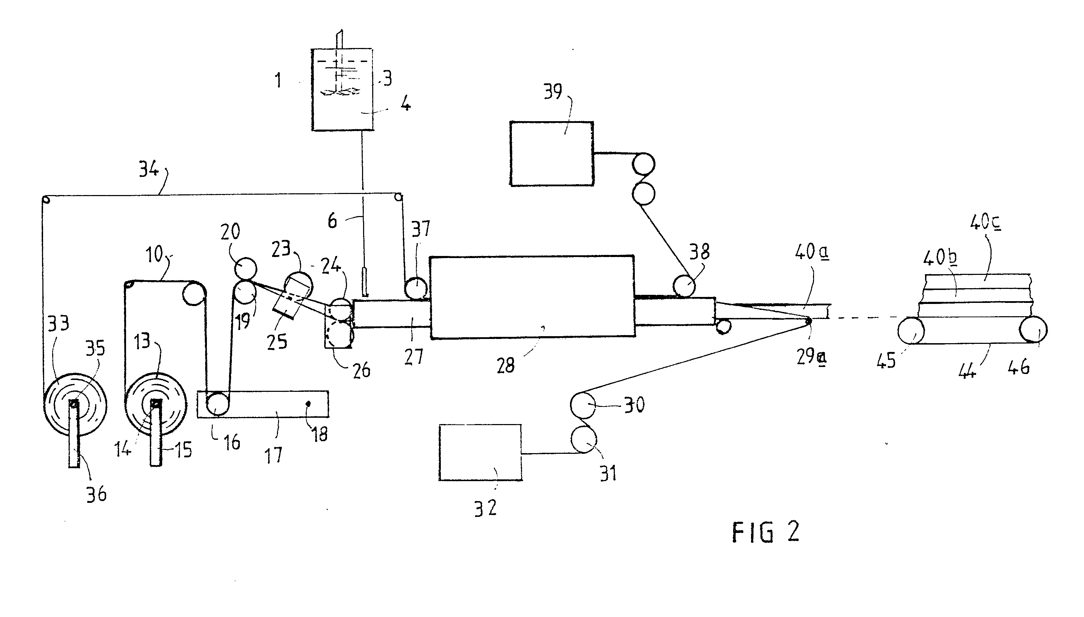

Nous allons maintenant décrire précisément une partie de l'installation qui est illustrée par la figure 2 et qui est reproduite en trois exemplaires dans l'installation. Chacune de ces parties correspond à la mise en oeuvre d'une bande continue de papier, déformée en sorte de servir de récipient continu pour une coule fraîche d'oeuf, et donc à la réalisation des deux premières étapes du procédé de l'invention, alimentation et précuisson, pour une couche donnée. Dans cette description nous parlerons d'une couche de blanc d'oeuf, s'agissant de la partie inférieure de l'installation.

Devant le bâti, à l'extrémité côté gauche sur la figure 2, une bobine 13, constituant un enroulement de la bande de papier 10, est emmanchée sur l'axe 14 rotatif du support bobine 15.

La bande de papier 10 a une largeur de 162 mm environ. Le papier est revêtu sur la face tournée vers l'extérieur de la bobine 13 d'une enduction de polyéthylène , limitant l'imprégnation du papier par la coule de blanc.

La bande 10 est supportée et entraînée par un ensemble de rouleaux fixés sur le bâti. Parmi ceux-ci le rouleau 16 assure la régulation de la tension de la bande 10 pendant son déplacement. Les deux extrémités de l'axe de rotation de ce rouleau 16 sont montés sur des paliers fixés sur des bras 17 pivotant autour d'un axe horizontal 18. Des contrepoids sont éventuellement montés, sur les bras 17 ou sur un axe reliant les deux bras 17, à l'extrémité opposée à l'axe de pivotement 18.

Les deux cylindres de pression 19 et 20 ont des axes de rotation parallèles et horizontaux. Ils tournent en sens inverse l'un de l'autre et s'appliquent l'un contre l'autre. Le cylindre inférieur 19 a selon deux directrices distantes de e, soit 121 mm, deux surépaisseurs 21, chacune étant de section triangulaire faisant toute la périphérie du cylindre. Le cylindre supérieur 20 a , en regard des deux surépaisseurs 21 du cylindre 19, deux évidements 22 de forme complémentaire auxdites surépaisseurs 21. Ainsi lorsque les deux cylindres 19 et 20 sont animés en rotation, les surépaisseurs 21 du cylindre 19 épousent les évidements 22 du cylindre 20.

Les rouleaux 23 et 24, placés sur le parcours de la bande 10, ont une largeur égale à l'écartement e ci-dessus. De part et d'autre des rouleaux 23 et 24 sont prévues des flasques respectivement 25 et 26, la première flasque 25 étant en oblique par rapport à l'horizontale,la seconde flasque 26 étant verticale.

Une barre 27 en quartz est fixée horizontalement sur le bâti, immédiatement après le rouleau 26 et longitudinalement par rapport à la bande 10. Elle traverse la cavité micro-onde 28 raccordée à des générateurs non représentés.La barre 27 présente une section transversale en forme de U, l'évidement intérieur ayant une largeur légèrement supérieure à l'écartement e et une hauteur au moins égale à la moitié de la différence entre la largeur de la bande 10 et l'écartement e. La partie haute des deux branches du U comporte de préférence un prolongement rabattu vers l'intérieur du U, capable d'empêcher les bords relevés de la bande de se replier vers la partie centrale.

En aval de la barre 27, la tige 29 est placée transversalement par rapport à la bande 10.Cette tige 29 est placée à une hauteur différente selon que la partie de l'installation concerne l'une ou l'autre couche, comme cela sera indiqué plus loin.

Deux rouleaux de traction 30 et 31 ainsi qu'un dispositif de déchiquetage 32 sont placés sur la bande 10, en aval de la tige 29, dans le sens du déplacement de ladite bande.

Devant le bâti, plus à gauche encore que le support bobine 15, une bobine 33, constituant un enroulement de la bande de papier 34 est emmanchée sur l'axe 35 rotatif du support bobine 36.

La bande de papier 34 est du même type que la première bande 10. Du fait du revêtement en polyéthylène, elle est imperméable à la vapeur d'eau. La bande 34 est supportée et entraînée par un ensemble de rouleaux fixés sur le bâti. Parmi ceux-ci, les rouleaux 37 et 38 sont placés , transversalement par rapport à la barre creusée 27, et juste au-dessus de celle-ci , respectivement à l'entrée et à la sortie de la cavité micro-onde 28. A la bande 34 est également associé un dispositif 39 de déchiquetage.

Au cours du fonctionnement de l'installation, la première bande de papier 10 est déroulée de la bobine 13 jusqu'au dispositif de déchiquetage 32. Elle passe successivement sur le rouleau de tension 16, entre les cylindres de pression 19 et 20 et dans la cavité micro-onde 28. En sortant de la bobine 13, la bande 10 est à plat. Lorsqu'elle passe entre les cylindres de pression 19 et 20, les empreintes mâle et femelle que sont les surépaisseurs 21 et les évidements 22 provoquent dans la bande 10 deux marques longitudinales , parallèles aux lisières de la bande et écartées l'une de l'autre de la distance e, soit 121 mm. Des moyens de guidage de la bande 10 sont prévus pour centrer exactement la bande 10 par rapport aux empreintes.

Les flasques 25 relèvent les bords 10b de la bande 10, tandis que le rouleau 23 maintient horizontale la partie centrale 10a de la bande 10. De même , les flasques 26 amènent les bords 10b verticalement par rapport à la partie centrale 10a.

La bande 10 étant dans cette configuration en forme de U, elle est ensuite supportée par la partie intérieure de la barre creusée 27.La barre creusée 27 peut comporter , après la sortie de la cavité micro-ondes 28, des moyens intégrés de chauffage, par exemple une double enveloppe chauffante, permettant de maintenir la couche contenue dans la partie intérieure de ladite barre 27 à une température proche de celle qu'elle avait dans la cavité 28, par exemple 73°C.

La bande 10 passe à plat sur la tige 29 , et est entraînée par les rouleaux de traction 30 et 31 vers le dispositif de déchiquetage 32. Les rouleaux de traction sont ici des rouleaux en acier inoxydable, dont la surface est garnie de clous, de telle sorte que la bande 10, embrochée sur cette garniture, est régulièrement tractée sur toute sa largeur. On comprend qu'entre l'extrémité aval de la barre 27 et la tige 29, les bords 10b de la bande 10 ne sont plus maintenus dans la position verticale et vrillent jusqu'à retrouver leur position initiale.

Le fonctionnement de cette partie de l'installation est le suivant. La vanne 11 étant ouverte, la coule fraîche de blanc d'oeuf, stockée dans la cuve 1, est envoyée par la conduite 6b, dans le récipient formé par la bande 10 conformée en U.

Le débit d'alimentation de la coule est fonction de la section du produit fini souhaité et de la vitesse d'avancement de la bande 10, elle-même étant fonction de la puissance du rayonnement micro-onde. Dans un exemple précis , le débit de coule était de 0,21 l/m n pour une vitesse de défilement de la bande 10 de 0,3 m/mn et une puissance aux générateurs micro-onde de 1,2 kw.

La coule contenue dans la bande 10 coagule lorsque celle-ci traverse la cavité 28. La bande 34 vient s'ajuster au-dessus de la partie supérieure de la barre 27 et forme un couvercle sensiblement étanche à la vapeur créée lors du chauffage de la coule. Cette disposition particulière permet une perte réduite en vapeur et une meilleure présentation de la surface de la face supérieure du produit fini 40, sortant de la cavité.

A la sortie de la cavité micro-ondes 27, la seconde bande 34 est envoyée vers le dispositif de déchiquetage 39 ; le produit fini 40 est un barreau continu de blanc d'oeuf coagulé, non encore complètement cuit dur, il est souple mais sa consistance est telle qu'il reste dans sa forme donnée par la bande 10, c'est-à-dire dans le présent exemple avec une section rectangulaire , de largeur 121 mm et de hauteur 6 mm. Entre la sortie de la barre 27 et le passage sur la tige 29, les bords 10b de la première bande 10 qui étaient verticaux sont mis à plat. Lors du passage sur la tige 29, la bande 10 subit une déviation d'un angle très important, de l'ordre de 120 à 170°, par rapport à sa direction initiale ; ce changement brutal de direction permet un décollement parfait du produit fini 40 de la bande 10. Après ce passage , la bande 10 est envoyée vers le dispositif de déchiquetage 33.

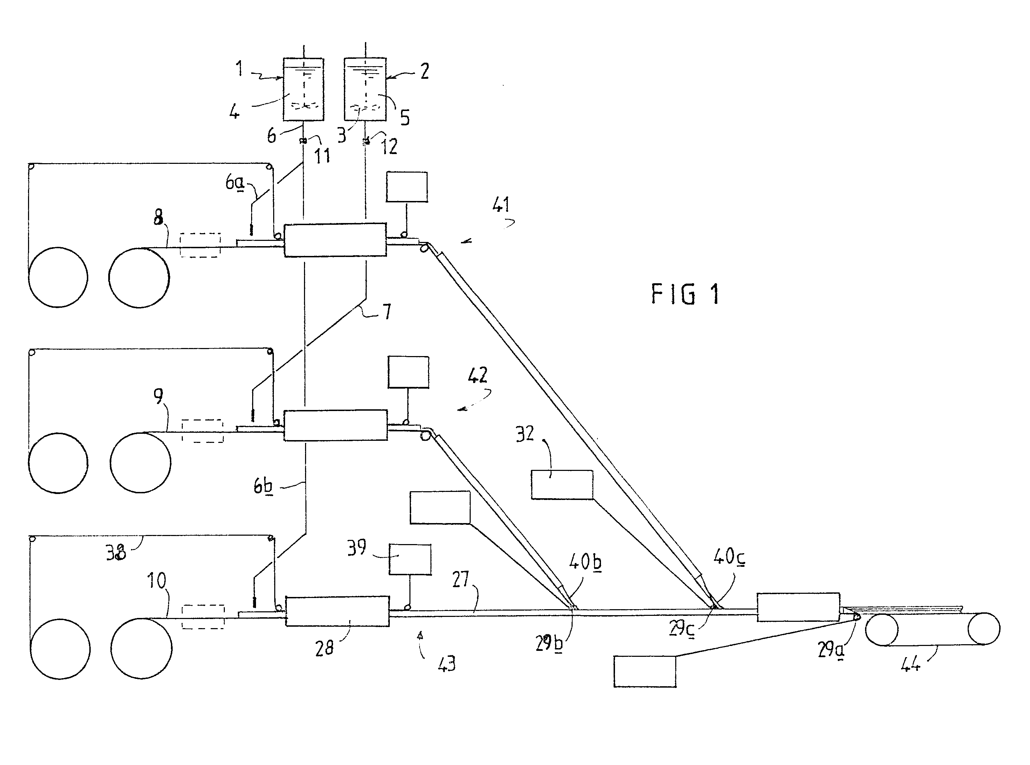

Dans l'installation , les trois ensembles partiels 41,42,43 (figure 1) de l'installation, aptes à former chacun une couche précuite, sont combinés de la manière suivante. La première bande 10a de l'ensemble 43, inférieur, a une direction maintenue sensiblement horizontale entre la barre de maintien 27 et la tige de détour 29a correspondante. L'ensemble 44, intermédiaire , est placé au-dessus de l'ensemble inférieur 43, avec une direction de la bande 9, après la barre 27 correspondante, en oblique jusqu'à la tige de détour 29b correspondante, qui est placée juste en-dessous de la bande 10 avant la tige de détour 29c. L'ensemble 45, supérieur, est placé en-dessus de l'ensemble intermédiaire 44, avec une direction de la bande 8, après la barre 27 correspondante, en oblique jusqu'à la tige de détour 29c correspondante qui est placée juste en-dessous de la bande 10 entre les deux tiges de détour 29b et 29c.

Les bandes en forme supérieure 8 et inférieure 10 sont alimentées avec de la coule de blanc d'oeuf; la bande intermédiaire 9 avec de la coule de jaune d'oeuf.

Le fonctionnement combiné des trois ensembles 41, 42, 43 est le suivant. Le barreau de blanc d'oeuf 40a précuit en forme , sortant de la cavité micro-onde de l'ensemble inférieur 43 est transporté horizontalement jusqu'à la tige de détour 29a correspondante. Le barreau de jaune d'oeuf 40b précuit en forme, sortant de l'ensemble intermédiaire 42 est transporté obliquement et descend jusqu'à la tige de détour 29b correspondante juste en dessus du barreau de blanc d'oeuf de l'ensemble inférieur 43. Le changement brutal de direction de la bande 9 autour de la tige 29b provoque le décollement du barreau de jaune d'oeuf 40b, qui vient se superposer par simple dépose sur le barreau 40a inférieur. De même le barreau de blanc d'oeuf 40c sortant de l'ensemble supérieur 41 vient se superposer par simple dépose sur la superposition du barreau 40a inférieur et 40b intermédiaire. On obtient ainsi la superposition des trois couches alternées de blanc et de jaune d'oeuf précuits. Préalablement à cette dépose du barreau de blanc d'oeuf 40c, un séchage de dessous dudit barreau 40c peut améliorer le complexage. Ce séchage est obtenu par exemple en soufflant de l'air chaud sous le barreau 40c après que celui-ci ait été décollé de la bande 8 correspondante et avant que celui-ci ait été déposé sur le barreau de jaune d'oeuf 40b. Si besoin est, on place sur le parcours du barreau de blanc d'oeuf 41c, après la barre de décollement 29c, un support ajouré, constitué par exemple de tiges transversales , sur lequel se déplace le barreau 41c.

Entre les deux tiges de détour 29c et 29a, c'est-à-dire dans la zone où les trois couches sont superposées et reposent sur la seule bande inférieure 10, on a placé une enceinte de traitement thermique, par exemple une cavité micro-onde du même type que celle décrite ci-dessus. Cette enceinte amène le produit complexe précuit à la cuisson souhaitée de sorte que se réalise le complexage des couches 40a , 40b et 40c entre elles.

Immédiatement après la dernière tige de détour 29a, dans la même direction , un tapis transporteur 44 est supporté et tendu entre deux rouleaux 45 et 46 dont l'un au moins est entraîné en rotation par des moyens non représentés. Le produit fini est transporté, après décollement de la bande 10 lors du passage sur la tige de détour 29a , sur le tapis 44 vers un autre poste où il sera tronçonné à la longueur désirée, éventuellement à la largeur désirée, emballé et conditionné par tout moyen adapté.

Pour la fabrication d'un produit de forme cubique, friandise pour l'apéritif , chaque bande avait une largeur intérieure 10a de 121 mm, la hauteur de coule dans la bande était de 5,6 mm, le produit était débité en largeurs égales de 17 mm et tronçonné à des longueurs égales de 17 mm.

L'invention n'est pas limitée au mode de réalisation qui vient d'être décrit mais en couvre toutes les variantes.

Les coules fraîches de blanc d'oeuf 4 et de jaune d'oeuf 5 peuvent être préchauffées avant l'étape de pré-cuisson, par exemple par passage des conduites 6 e t 7 dans un échangeur, et portées à une température de l'ordre de 45°C.

En particulier la bande support 10 peut être une bande continue mais en boucle fermée supportée par des rouleaux de détour. Par exemple, elle sera en caoutchouc, avec un relief en creux tel que sa section transversale aura une forme en U.

Avantageusement la bande, en papier ou en caoutchouc, présente une légère inclinaison, étant plus élevée dans la zone d'alimentation , au niveau du rouleau 24 que dans la cavité micro-onde 28, de telle sorte qu'elle fasse un angle de quelques degrés par rapport à l'horizontale. Cette inclinaison favorise la constance de l'alimentation en évitant l'étalement éventuel de la coule en amont de la zone d'alimentation et, de ce fait, assure une bonne homogénéité quant à la hauteur de la couche précuite.

Bien sûr il est possible de réaliser des produits complexes à base d'oeufs ayant une autre structure, en modifiant le nombre de couches, la forme de chacune d'elles etc... tout en restant dans le cadre de l'invention.

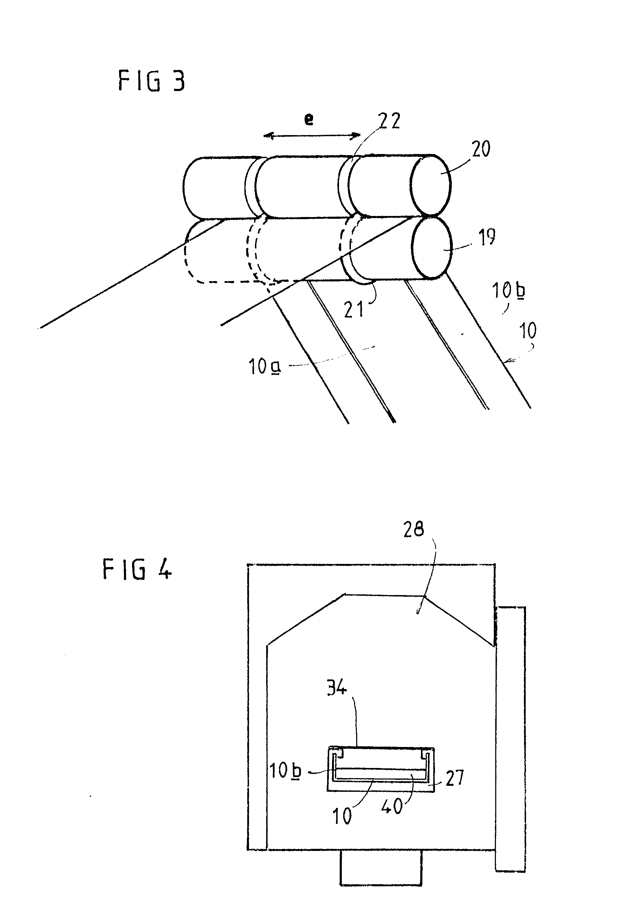

La cavité 28 montrée à la figure 4 est une cavité résonnante alimentée par au moins un guide à fentes rayonnantes et calorifiques, le contenant étant positionné à l'intérieur de la cavité 28 de telle sorte que l'action des micro-ondes soit homogène dans tout le volume du produit 40. Il est possible d'utiliser d'autres types de cavité conduisant à un résultat équivalent.

**Revendications**

1. Procédé de fabrication d'un produit complexe à base d'oeuf sous forme de couches superposées et alternées de blanc et de jaune à l'état cuit dur, caractérisé en ce qu'il comprend les quatre étapes suivantes :

a) une étape d'alimentation consistant à alimenter $n_1$ contenants en coule fraîche de blanc d'oeuf et $n_2$ contenants en coule fraîche de jaune d'oeuf, lesdits contenants ayant la même forme et étant réalisés dans un matériau inerte aux micro-ondes, la somme $n = n_1 + n_2$ étant au moins égale à deux et $n_1$ étant soit égal à $n_2$ soit différent de $n_2$ d'une unité,

b) une étape de précuisson consistant à soumettre chaque coule à l'action des micro-ondes de telle sorte qu'elle coagule dans le contenant , sous forme d'une couche homogène, sans toutefois atteindre l'état cuit dur,

c) une étape de superposition consistant à extraire des contenants les couches et superposer sur la couche inférieure les couches extraites de telle sorte qu'une couche à base de coule de blanc alterne avec une couche à base de coule de jaune,

d) et une étape de complexage consistant à soumettre les couches ainsi superposées à un traitement thermique complémentaire, ayant pour but d'atteindre la cuisson désirée, tout en assurant le complexage des différentes couches.

2. Procédé selon la revendication 1 caractérisé en ce que, pendant l'etape de pré-cuisson, chaque coule est maintenue dans une atmosphère de vapeur saturée.

3. Procédé selon l'une des revendications 1 et 2 caractérisé en ce que, la partie creuse de chaque contenant ayant une section de forme rectangulaire , l'alimentation en coule fraîche de chacun des $n$ contenants est telle que la hauteur de la coule dans chaque contenant est égale à $1/n$ fois la largeur du contenant, moyennant quoi le produit complexe obtenu a une section carrée dans laquelle chaque couche superposée est de mêmes dimensions.

4. Procédé selon l'une des revendications 1 à 3 caractérisé en ce que l'alimentation en coules fraîches est continue dans chaque contenant , qui consiste en une bande continue présentant un relief en creux, la précuisson se fait par passage des $n$ bandes (8,9,10) sans fin dans au moins une enceinte (22) alimentée en micro-ondes , et le produit obtenu après complexage est tronçonné en produits individuels à la longueur désirée.

5. Procédé selon l'une des revendications 1 à 4 caractérisé en ce que , les $n$ bandes continues (8,9,10) étant placées l'une au-dessus de l'autre, la superposition d'une première couche correspondant à une bande supérieure (8) sur une seconde couche correspondant à une bande inférieure (9) est obtenue par démoulage de la première couche et dépose de la première couche ainsi démoulée sur la seconde couche en place dans la bande inférieure (9).

6. Procédé selon la revendication 5 caractérisé en ce que, avant démoulage et superposition, chaque couche est maintenue à une température proche de la température de coagulation, par exemple 73°C

7. Procédé selon la revendication 5 caractérisé en ce que, après démoulage, la face de dessous de la première couche correspondant à une bande supérieure (8) est séchée avant d'être déposée sur la seconde couche en place dans la bande inférieure (9).

8. Procédé selon l'une des revendications 1 à 5 caractérisé en ce que le traitement thermique complémentaire de cuisson consiste dans l'action des micro-ondes.

9. Installation pour la mise en oeuvre du procédé selon la revendication 1 caractérisée en ce qu'elle comprend :

a. des moyens en alimentation séparée de coule fraîche à base de blanc (4) et en coule fraîche à base de jaune (6),

b. $n$ contenants (8,9,10) de forme identique, réalisés en un matériau inerte aux micro-ondes, $n$ étant égal ou supérieur à 2, dont $n1$ pour le blanc et $n2$ pour le jaune, $n1$ étant égal à $n2$ ou différent de $n2$ d'une unité,

c. des moyens de pré-cuisson par micro-ondes des coules contenues dans les contenants, réglés en sorte que chaque coule coagule de façon homogène dans le contenant sans toutefois atteindre l'état cuit dur,

d. des moyens de superposition des couches de coules précuites,

e. des moyens (34) de traitement thermique des couches superposées, réglés en sorte d'assurer le complexage des différentes couches et d'atteindre la cuisson désirée.

10. Installation selon la revendication 9 caractérisée en ce que les moyens en alimentation séparée en coules fraîches comprennent deux réservoirs distincts, l'un (1) destiné à contenir les coules à base de blanc (4) et l'autre (2) les coules à base de jaune (5), des moyens (3) d'agitation des coules contenues dans chaque réservoir et des moyens (6,7) d'alimentation proprement dits des coules dans les $n$ contenants.

11. Installation selon la revendication 9 caractérisée en ce que chaque contenant consiste en une bande continue (10) consistant en un matériau plat et flexible, et en ce qu'elle comprend des moyens de déformation transversale en sorte de donner à la bande la forme d'un récipient continu, des moyens de maintien de la bande dans cette configuration pendant son déplacement dans les moyens de précuisson et des moyens de support et de déplacement de chaque bande.

12. Installation selon la revendication 11 caractérisée en ce que chaque bande continue est en papier présentant sur la face en contact avec la coule un revêtement anti-adhérent.

13. Installation selon l'une des revendications 11 ou 12 caractérisée en ce que les moyens de déformation consistent dans :

a) deux cylindres de pression (19,20) qui comportent selon au moins deux directrices l'un (19) une surépaisseur (21) formant empreinte mâle et l'autre (20) un évidement (22) en regard de la surépaisseur (21) et formant empreinte femelle,

b) des moyens de guidage de la bande placés en sorte que les pliures formées sur la bande par les empreintes des cylindres de pression soient parallèles aux bords de la bande et dans la disposition souhaitée,

c) des moyens d'appui (25,26) placés sur le parcours et de chaque côté de la bande après les cylindres de pression (19,20) , capables de relever les bords (10b) de la bande.

14. Installation selon la revendication 9 caractérisée en ce que chaque contenant consiste en une bande sans fin, en forme de boucle fermée réalisée en un matériau souple, et présentant un relief en creux, et l'installation comporte des moyens de support et de déplacement de chaque bande.

15. Installation selon la revendication 9 caractérisée en ce que les moyens de pré-cuisson par micro-ondes consistent en une cavité (22) résonnante placée dans le sens du déplacement de la bande après la zone d'alimentation.

16. Installation pour la mise en oeuvre du procédé selon la revendication 2 caractérisée en ce que la cavité micro-onde est assortie de moyens de production de vapeur d'eau ou de conservation de la vapeur d'eau dégagée lors de la précuisson, capables de maintenir une atmosphère de vapeur saturée autour du contenant pendant la précuisson.

17. Installation selon la revendication 16 caractérisée en ce que les moyens capables de maintenir une atmosphère de vapeur saturée autour du contenant pendant la précuisson consistent en une plaque, formant couvercle, dans un matériau inerte aux micro-ondes, placée au-dessus et entourant le contenant pendant l'action des micro-ondes.

18. Installation selon la revendication 16 caractérisée en ce que les moyens capables de maintenir une atmosphère de vapeur saturée autour du contenant pendant la précuisson consistent en une bande (34) plate et continue, d'un matériau imperméable à la vapeur d'eau et inerte aux micro-ondes, assortie de moyens de déplacement (37,38) capables de positionner ladite bande (34) lors de son déplacement en-dessous du contenant (10) , de manière à former un couvercle.

19. Installation selon l'une des revendications 11 ou 14 caractérisée en ce que la bande présente une inclinaison de l'ordre de quelques degrés entre la zone d'alimentation et la zone d'action des micro-ondes, étant plus haute dans la zone d'alimentation.

20. Installation selon l'une des revendications 11 ou 14 caractérisée en ce qu'une première bande (9) correspondant à une couche donnée est placée au-dessus d'une seconde bande (10) correspondant à une couche adjacente de telle sorte que , étant sortie de l'enceinte micro-ondes (28) correspondante, la première bande (9) se trouve placée juste en-dessus et inclinée vers la seconde bande (10) , elle-même sortie de l'enceinte micro-ondes (28) correspondante.

21. Installation selon la revendication 9 caractérisée en ce que les moyens thermiques complémentaires de cuisson consistent en une cavité micro-ondes.

FIG 1

FIG 2

FIG 3

FIG 4

| | Office européen des brevets | RAPPORT DE RECHERCHE EUROPEENNE | Numero de la demande |
|---|---|---|---|

EP 89 40 2079

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 172 904 (CENTRE AVICOLE DE L'ILE-DE-FRANCE)<br>* Revendications 1,4,9,10-11; page 3, lignes 2-14; page 4, lignes 25-37; page 6, lignes 10-28; page 7, lignes 15-24; figure 8 *<br>--- | 1-2 | A 23 L 1/322<br>A 23 P 1/08<br>A 23 P 1/10 |
| A | FR-A-2 498 897 (P. PIQUILLOUD et al.)<br>* Revendications 1,5; page 6, lignes 18-30 *<br>--- | 1 | |
| A | US-A-3 920 370 (R.E. MILLER)<br>* Revendications 1,2; colonne 2, lignes 42-47; colonne 4, lignes 3-9; colonne 6, lignes 13-18 *<br>----- | 9,11 | |

DOMAINES TECHNIQUES
RECHERCHES (Int. Cl.5)

A 23 L
A 23 P

Le présent rapport a été établi pour toutes les revendications

| Lieu de la recherche | Date d'achèvement de la recherche | Examinateur |
|---|---|---|
| LA HAYE | 02-11-1989 | SANTOS Y DIAZ A.I. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................................
& : membre de la même famille, document correspondant

EPO FORM 1503 03.82 (P0402)